# EUROPEAN PATENT SPECIFICATION

(11) **EP 3 045 245 B1**
(45) Date of publication and mention of the grant of the patent: **12.06.2024**
(21) Application number: 16158853.8
(22) Date of filing: 07.05.2012
(51) Int. Cl.: B23B 51/00, B23B 51/02

(54) **MASONRY DRILL BIT**
STEINBOHRERSPITZE
TRÉPAN DE MAÇONNERIE

(30) Priority: 06.05.2011 DE 202011100380 U
(43) Date of publication of application: 20.07.2016
(62) Divisional of application: 12722240.4
(73) Proprietor: Heller Tools GmbH, 49413 Dinklage (DE)
(72) Inventor: Lampe, Rainer, 49413 Dinklage (DE); Kersten, Heinrich, 27283 Verden (DE)
(74) Representative: Gottschald, Jan

(56) References cited:
- EP-A2- 0 965 405
- EP-A2- 1 923 158
- WO-A1-99/50014
- DE-A1- 2 152 127
- DE-A1- 4 242 911
- DE-U1-202008 017 395
- US-A1- 2002 053 473
- US-A1- 2003 000 745
- US-B1- 6 283 232
- US-B1- 6 446 741

## Description

The invention relates to a masonry drill bit as per the preamble of claim 1, to a cutting insert as per the preamble of claim 6 and to a core drill as per the preamble of claim 10.

The masonry drill bit in question is suitable for drilling into concrete or reinforced concrete, but also into other masonry, rock or the like. The masonry drill bit in question is usually equipped with an insertion portion, a helix adjoining the insertion portion and a head portion adjoining the helix.

Essential criteria for the design of masonry drill bits of the kind in question are easy centering, the achievable drilling progress per time unit, the high period of use and not least the low degree of wear.

Different kind of masonry drill bits are known in the art. In WO 99/50014 A1 as well as in US 2003/0000745 A1 a drill bit with two main cutting edges is described. In US 6,283,232 B1 a drill bit with two main cutting edges and two auxiliary cutting edges is described.

The known masonry drill bit (DE 199 44 406 C2), on which the present invention it based, is equipped with a cutting insert having a substantially roof-shaped configuration. On both sides of the longitudinal axis of the drill bit there extend two main cutting edges which are each formed by a leading rake face and by a trailing flank adjoining the rake face. The main cutting edges merge into a transverse cutting edge in the central region of the drill head. What is interesting in this case is the fact that the transverse cutting edge is formed in a concave manner as seen from the side. This type of chisel edge is also known as a "point-thinned chisel edge".

Surprisingly, the centering action of the above known masonry drill bit having a point-thinned chisel edge is extraordinarily good. On account of the fact that there is virtually no obstructing lip in the center of the drill bit, the known masonry drill bit also has advantages with regard to the achievable drilling progress per time unit. The fact that the transverse cutting edge has, on account of its concave form, two axially protruding transverse cutting tips which lead to a corresponding concentration of force during drilling operation, also plays a particularly important role for the achievable drilling progress.

The invention is based on the problem of configuring and developing the known masonry drill bit such that the achievable drilling progress is further improved, in particular when reinforced material is drilled.

What is essential is the knowledge that the applicability of the principle of "point-thinned chisel edges" does not have to be limited to the main cutting edges. Rather, this principle can also be applied to regions of the masonry drill bit which are located to the side of the transverse cutting edge and/or of the main cutting edges.

Specifically, it may be that the transverse cutting edge is formed by two adjacent channels and that each transverse cutting tip is adjoined by two webs which provide the lateral boundaries of the channels by forming additional edges. Thus, each channel has two lateral webs, specifically a leading web and a trailing web, in each case with regard to the direction of rotation of the masonry drill bit.

The expression "additional edges" should be understood here as meaning that the webs are not a constituent part of the main cutting edge or of the transverse cutting edge, but rather are expressly formed in addition to the above edges.

It may be that the transverse cutting tips effectively continue in the abovementioned webs, while the transverse cutting edge continues in the two channels. A longitudinal section in the region of the two channels thus always results substantially in the form of a point-thinned chisel edge. As a result, the above-discussed concentration of force on account of the point-thinned chisel edge can be extended to the regions to the sides of the chisel edge. The principle of the point-thinned chisel edge has effectively been extended to an additional dimension.

In the particularly preferred refinement, it is provided that at least in each case the leading web of a channel is formed as a secondary cutting edge. Here, it has been recognized that the additional webs can also be used as cutting edges.

In particularly preferred refinements, it is provided that the trailing web has less of a cutting action than the leading web, since the trailing web is set back with regard to possible cutting engagement. The idea here is to improve the centering action of the masonry drill bit by way of the above setting back of the trailing web. Thus, a reduction in the cutting action of the trailing web is effectively accepted.

In the further preferred refinements, it is provided that there are provided at least two auxiliary cutting edges, which each extend along an auxiliary cutting axis and which are each arranged at an angle to a main cutting axis.

In the case of a masonry drill bit as per the preamble of claim 1, the above problem is solved by the features in the characterizing part of claim 1.

This teaching relates to a masonry drill bit having a shank having an insertion end and a drill head, wherein the drill head has two main cutting edges which extend on both sides of the longitudinal axis of the drill bit, preferably substantially along a main cutting axis, wherein there are provided at least two auxiliary cutting edges which each extend along an auxiliary cutting axis and which are arranged at an angle to a main cutting axis.

What is essential is that the auxiliary cutting edge is formed by a leading rake face and by a trailing flank adjoining the rake face, and that a leading ramp with respect to the rake face is provided, said ramp rising axially toward the rake face with regard to the longitudinal axis of the drill bit. The interpretation of the expression "rising axially" proceeds quite generally from the fact that the insertion end is located at the lowest point and the drill head at the highest point.

With the above, leading ramp, catching of the auxiliary cutting edge with material to be drilled, in particular with reinforcement present in the material to be drilled, can be reliably ruled out. During drilling, the material to be drilled slides along the ramp, such that the material to be drilled is effectively guided over the cutting edge. Strictly speaking, it is of course the other way round here, with the masonry drill bit sliding on the material to be drilled.

The ramp ends in the region of the rake face, preferably in the rake face, of the auxiliary cutting edge and the end point is set back axially from the auxiliary cutting edge. With this axial setting back, the desired cutting engagement between the auxiliary cutting edge and the material to be drilled can be set precisely. In this way, an optimal compromise between cutting engagement, on the one hand, and tendency to catch, in particular with respect to reinforcement to be severed, on the other hand, is achievable.

In a preferred refinement, the main cutting edges, the transverse cutting edge or the auxiliary cutting edges are arranged selectively on an in particular single-piece cutting insert. Correspondingly, a plurality of single-piece cutting inserts can also be used here.

An above cutting insert for a masonry drill bit is the subject matter of a further teaching according to claim 6, to which independent importance is likewise attached.

The further teaching relates to a cutting insert for a masonry drill bit, wherein a cutting edge is provided and wherein the cutting edge is formed in the usual manner by a leading rake face and by a trailing flank adjoining the rake face.

What is essential according to this further teaching is that an above-discussed leading ramp with respect to the rake face is provided, said ramp rising axially toward the rake face with regard to the longitudinal axis of the drill bit. Reference may be made to all embodiments regarding the auxiliary cutting edges having a leading ramp.

In this context, it may be noted that the cutting insert according to the proposal is very particularly suitable for realizing the above-discussed auxiliary cutting edges of a masonry drill bit.

The invention is explained in more detail in the following text on the basis of a drawing which illustrates only one exemplary embodiment and in which:

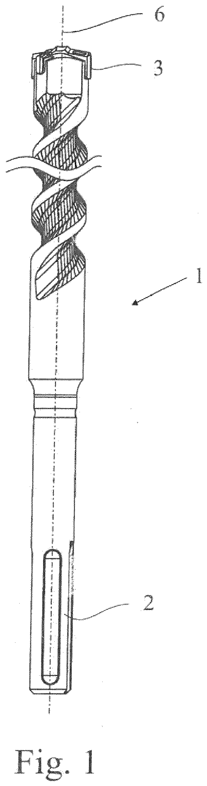

- figure 1: shows a side view of an exemplary embodiment of a masonry drill bit according to the proposal,
- figure 2: shows a perspective view of the drill head of the masonry drill bit according to figure 1,
- figure 3: shows a plan view of the drill head of the masonry drill bit according to figure 1,
- figure 4: shows a perspective view of the cutting insert, having the main cutting edges, of the masonry drill bit according to figure 1 in the detached state, and
- figure 5: shows a perspective view of the cutting insert, having the auxiliary cutting edge, of the masonry drill bit according to figure 1 in the detached state.

The masonry drill bit according to the proposal and illustrated in the drawing has a shank 1 having an insertion end 2 and a drill head 3 at the end of the shank 1 remote from the insertion end 2.

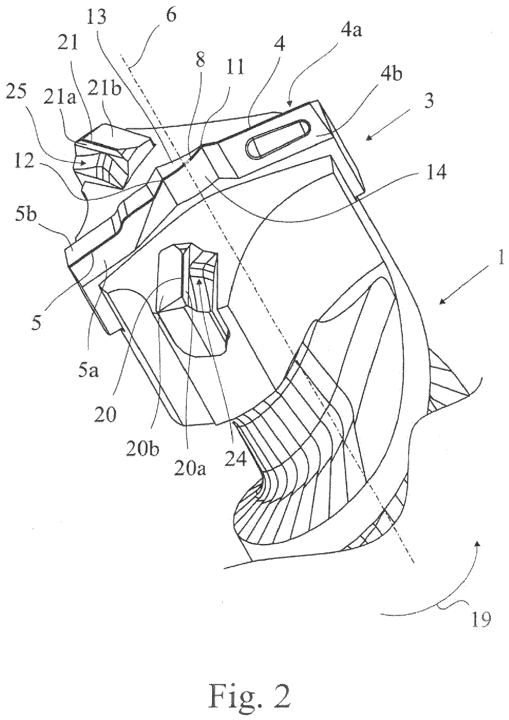

Figures 2 to 4 show that the drill head 3 has two main cutting edges 4, 5, which extend on both sides of the longitudinal axis 6 of the drill bit, here and preferably substantially along a main cutting axis 7. The main cutting edges 4, 5 can also be oriented in an inclined manner with respect to one another as seen from above. Here, the expression "as seen from above" always means the viewing direction toward the drill head 3 in the direction of the insertion end 2.

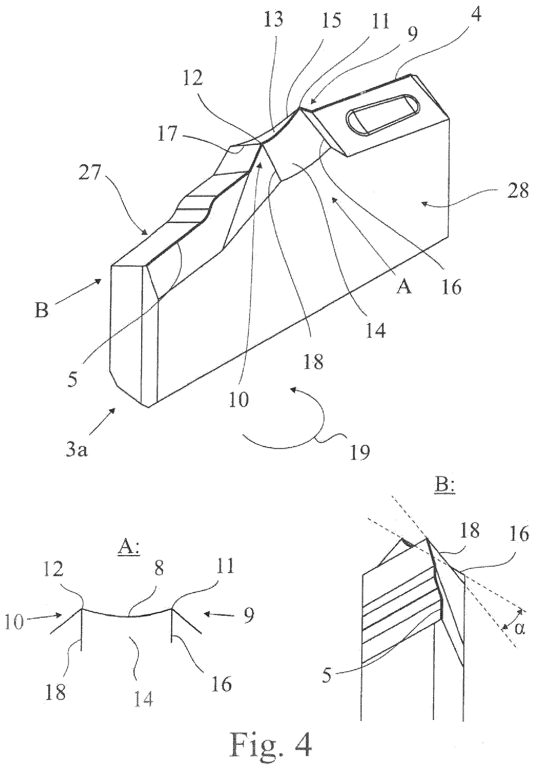

The specific realization of the main cutting edges 4, 5 plays only a subordinate role for the solution according to the proposal. This also applies for a step (figures 2 and 4) realized in the main cutting edge 5, said step not being discussed further here. In principle, it is also possible to provide more than two main cutting edges 4, 5 here.

The main cutting edges 4, 5 are each formed by a leading rake face 4a, 5a and by a trailing flank 4b, 5b adjoining the rake face 4a, 5a. In this case, the main cutting edges 4, 5 each converge toward a transverse cutting edge 8 arranged in the central region of the drill head 3.

The transverse cutting edge 8 is formed in a substantially concave manner as seen from the side (figure 4, view A). The expression "substantially concave" means that it does not necessarily have to be a curved, concave form here. Rather, it is conceivable for a concave form to be merely approximated, for example by a succession of linear sections.

The transverse cutting edge 8 is bounded by two transverse cutting ends 9, 10, which have two axially protruding transverse cutting tips 11, 12.

In the exemplary embodiment illustrated and to this extent preferred, the transverse cutting tips 11, 12 have an identical axial height. However, it is also conceivable in principle for the axial height of the two transverse cutting tips 11, 12 to be different.

What is essential now is that the transverse cutting edge 8 is formed by two adjacent channels 13, 14 and that each transverse cutting tip 11, 12 is adjoined by two webs 15-18. In the exemplary embodiment illustrated, the webs 15, 16 adjoin the transverse cutting tip 11 and the webs 17, 18 adjoin the transverse cutting tip 12.

It can be seen most clearly from the illustration according to figure 4 that the webs 15-18 form edges which are provided in the above sense in addition to the main cutting edges 4, 5 and the transverse cutting edge 8. Figure 4 also shows that the webs 15-18 provide the lateral boundaries of the channels 13, 14 by the formation of these additional edges. As a result, each channel 13, 14 has a leading web 16, 17 and a trailing web 15, 18 with respect to the direction of rotation of the masonry drill bit. The direction of rotation of the illustrated masonry drill bit has been provided with the reference sign 19 in figures 2-4.

In the exemplary embodiment illustrated and to this extent preferred, the channels 13, 14 extend in a substantially straight manner. This is in any case preferred for the region close to the tips. However, it is also conceivable for the channels 13, 14 to have a curved course or the like.

The same applies to the webs 15-18. Here and preferably, the webs 15-18 are configured in a substantially straight manner at least in the region close to the tips. Here, too, a curved course or the like is conceivable.

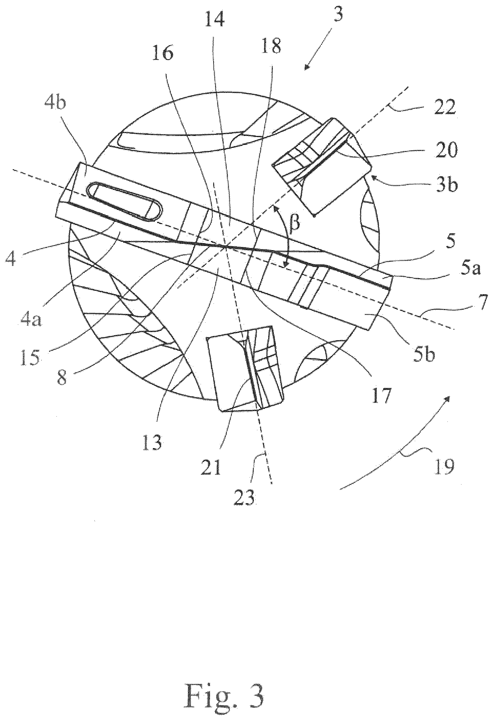

Figure 3 shows that the main cutting edges 4, 5 in the exemplary embodiment illustrated extend substantially along the main cutting axis 7, with the channels 13, 14 extending substantially transversely to the main cutting axis 7. This is interesting especially with regard to the cutting action of the webs 15-18, which is still to be explained.

As can be seen from looking at figures 2-4 together, not only the webs 15-18 but also the main cutting edges 4, 5 adjoin the transverse cutting tips 11, 12, such that a continuous cutting edge profile is produced between the two main cutting edges 4, 5 via the transverse cutting edge 8. However, it is also conceivable for the main cutting edges 4, 5 to be separated from the transverse cutting edge 8.

In the transverse cutting tips 11, 12, the angles between the main cutting edge 4, 5 and the web 15-18 are each preferably in a range between 60° and 120°.

In a particularly preferred refinement, as seen from above, the two webs 15, 16 and 17, 18 respectively adjoining a transverse cutting tip 11, 12 extend substantially in opposite directions. Here and preferably, the webs 15, 16 and 17, 18 in question even lie on a line, as seen from above. Alternatively or in addition, it is provided that, as seen from above, the two webs 15, 17 and 16, 18 of a channel 13, 14 are oriented substantially parallel to one another.

In order to be able to ensure the above-discussed concentration of force along the webs 15-18, it is advantageously provided that the channels 13, 14 are formed in a substantially concave manner in cross section (figure 4, view A). The term "concave" should be interpreted broadly, as discussed above.

In certain areas of application, it may suffice for the transverse cutting tips 11, 12 to be configured in a mound-like manner. However, here and preferably, the transverse cutting tips 11, 12 are each configured in a pointed manner in order to achieve a maximum concentration of force. In this case, the rounding radius in the transverse cutting tips 11, 12 is less than about 0.9 mm and is more preferably between about 0.1 mm and about 0.9 mm.

In a corresponding manner, it is further preferably provided that the webs 15-18 are configured in a substantially tapering manner as seen in cross section. Specifically, in cross section, the rounding radius in the webs 15-28 is preferably under about 0.9 mm, further preferably between about 0.1 mm and about 0.9 mm.

The webs 15-18 having the resulting additional edges allow a particularly good disintegration action during hammer drilling on account of the high concentration of force along the webs 15-18. However, in addition, it can also be provided that at least one of the two webs 15-18 of a channel 13, 14 is formed as a secondary cutting edge. In the present case, the leading web 16, 17 of the channels 13, 14 is formed as a secondary cutting edge. This means firstly that in any case these webs 16, 17 are formed in a correspondingly tapering manner in cross section.

In order to support the action of the leading webs 16, 17 as secondary cutting edges, it is further preferably provided that the two webs 15-18 of a channel 13, 14 are set in relation to one another.

Preferably, the setting angle α is in the range between about 10° and about 30°. Here and preferably, the setting angle is about 20°. In a particularly preferred refinement, the two webs 15, 17 and 16, 18 of a channel 13, 14 are set in relation to one another such that the trailing web 15, 18 is located at least in part closer to the longitudinal axis 6 of the drill bit than the respectively leading web 16, 17. Further preferably, the two webs 15, 17 and 16, 18 are set substantially only in one pivoting dimension in relation to one another, specifically about a pivot axis which is preferably oriented substantially parallel to the main cutting axis 7 or to the transverse cutting edge 8.

Advantageously, the trailing web 15, 18 is arranged with respect to the leading web 16, 17 of a channel 13, 14 such that the envelope of the movement of the trailing web 15, 18 is located at least in part, preferably substantially, within the envelope of the movement of the leading web 16, 17.

The solution according to the proposal can be applied to any conceivable masonry drill bits. In the exemplary embodiment illustrated and to this extent preferred, the masonry drill bit is equipped with two auxiliary cutting edges 20, 21, which each extend along an auxiliary cutting axis 22, 23. In principle, more than two auxiliary cutting edges 20, 21 can also be provided here. In a particularly preferred refinement, the auxiliary cutting axes 22, 23 each extend through the longitudinal axis 6 of the drill bit. However, it may also be advantageous for the auxiliary cutting edges 20, 21 to run past the longitudinal axis 6 of the drill bit.

Figure 3 shows that the auxiliary cutting edges 20, 21 are oriented substantially symmetrically with respect to the main cutting axis 7. In this case, the angle β between the respective auxiliary cutting axis 22, 23 and the main cutting axis 7 is between about 50° and about 70°. In principle, it is also possible to deviate from the symmetrical arrangement of the auxiliary cutting edges 20, 21.

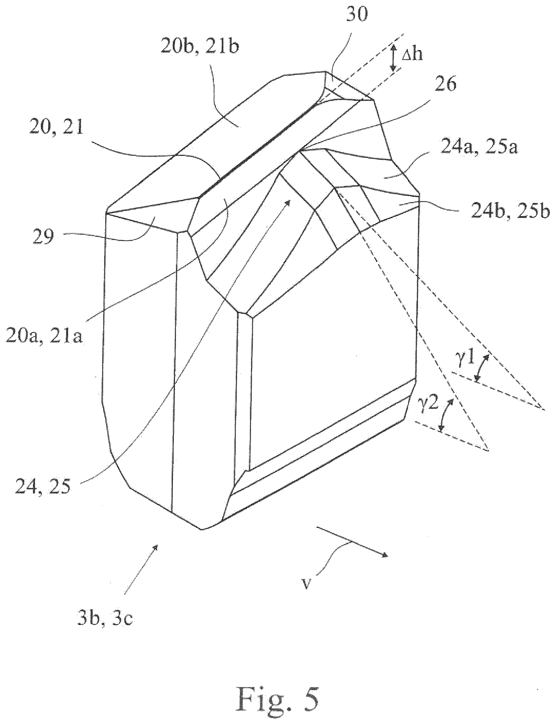

What is particularly interesting in the exemplary embodiment illustrated and to this extent preferred is the fact that each auxiliary cutting edge 20, 21 is formed by a leading rake face 20a, 21a and by a trailing flank 20b, 21b adjoining the rake face 20a, 21a. Figure 5 shows an insert element as such, which is inserted here in duplicate in an identical form into the drill head 3 to realize the auxiliary cutting edges 20, 21.

A leading ramp 24, 25 with respect to the rake face 20a, 21a is provided, said ramp 24, 25 rising axially toward the rake face 20a, 21a with regard to the longitudinal axis 6 of the drill bit. The resulting ramp angle γ is shown in figure 5. The ramp angle γ is preferably in a range between about 20° and about 60°. In this case, the movement vector v for the auxiliary cutting edge 20, 21 provides the reference direction for the respective ramp angle γ.

In the exemplary embodiment illustrated and to this extent preferred, the ramp 24, 25 has different ramp angles γ₁ and γ₂. Specifically, the ramp angle γ decreases toward the rake face 20a, 21a. For this purpose, the ramp 24, 25 has at least two, preferably exactly two, ramp regions 24a, 24b, 25a, 25b arranged in succession, wherein the ramp angle γ₂ in the leading ramp region 24b, 25b is greater than the ramp angle γ₁ in the trailing ramp region 24a, 25a. By way of the flattened portion, provided here in two steps, of the ramp angle γ, it is possible for the trailing ramp region 24a, 25a to be as wide as possible in the movement direction v, such that an optimal support for the cutting edge 20, 21 is produced. By way of the steeper, leading ramp region 24b, 25b, the remaining height difference dependent on the respective constructive boundary conditions can be bridged. It may be noted that more than two above ramp regions 24a, 24b, 25a, 25b can also be provided. It may also be noted that the decrease in the ramp angle γ toward the rake face 20a, 21a can proceed continuously, that is to say in a stepless manner.

Figure 5 shows that the ramp 24, 25 ends in the region of the rake face 20a, 21a, here in the rake face 20a, 21a, of the auxiliary cutting edge 20, 21, wherein here and preferably, the end point 26 is set back axially from the auxiliary cutting edge 20, 21 by the height difference Δh. By way of a change in this offset Δh, the cutting engagement, on the one hand, and the tendency to catch, on the other hand, can, as explained above, be set precisely to the drilling environment to be expected. The expression "in the region of the rake face 20a, 21a" means here that the end point 26 does not have to be located exactly in the rake face 20a, 21a, but can, for example, also be located beneath or also to the side of the rake face 20a, 21a.

The shape of the ramp 24, 25 can be selected in a wide range. As can be seen from the illustration according to figure 5, the ramp 24, 25 is formed at least in part in a web-like manner here. With the web-like form, the sliding properties of the ramp 24, 25 can be varied. In this case, it is preferably provided that at least that part of the ramp 24, 25 that is close to the rake face is formed in a web-like manner in the above sense.

In order to reduce as far as possible the friction on account of the ramp 24, 25 and the energy losses associated therewith, it is provided in a further preferred refinement that, as seen from above, the web-like part of the ramp 24, 25 is configured in a curved, here and preferably circularly curved, manner. In this case, the web-like, circularly curved part is at best aligned with the longitudinal axis 6 of the drill bit. This, too, can be gathered from the illustration according to figure 3.

With regard to the friction that occurs, on the one hand, and the resulting concentration of force on the auxiliary cutting edge 20, 21, it should be emphasized as advantageous here that the cutting edge 20, 21 is slightly beveled at its two ends, this having been constructively implemented by the two bevels 29, 30.

In principle, all of the above-discussed cutting edges 4, 5, 8, 20, 21 can be realized on a single-piece drill head which is then configured as a solid carbide head.

Figure 4 shows that in the exemplary embodiment illustrated the main cutting edges 4, 5 and the transverse cutting edge 8 are arranged on a here and preferably single-piece cutting insert 3a, which is preferably configured as a carbide insert. The carbide insert 3a has two flat sides 27, 28, with the webs 15-18 extending as far as the flat sides 27, 28. In addition, it is provided according to figure 5 that the auxiliary cutting edges 20, 21, too, are each arranged on a single-piece cutting insert 3b, 3c, which is in turn configured as a carbide insert.

The cutting inserts 3a, 3b, 3c shown in figures 4 and 5 are each configured in a single-piece manner. In principle, a multi-piece configuration is also conceivable here.

According to a further teaching, to which independent importance is attached, the above masonry drill bit having an auxiliary cutting edge 20, 21 is claimed as such, without the realization of the first-mentioned teaching, specifically the realization of a transverse cutting edge 8 having webs 15-18, coming into question. In this respect, reference may be made to all the above embodiments.

According to a further teaching, to which likewise independent importance is attached, a cutting insert 3b, 3c, illustrated in figure 5, having a ramp 24, 25 is claimed as such. Again, in order to explain this further teaching, reference may be made to all the above embodiments.

With regard to the independently claimed cutting insert 3b, 3c, it may also be noted that this cutting insert 3b, 3c can be used for all conceivable types of masonry drill bits. These include in particular core drills having a cylindrical support in which a plurality of cutting inserts, which each correspond to the cutting insert 3b, 3c according to the proposal, are inserted.

## Claims

1. A masonry drill bit having a shank (1) having an insertion end (2) and a drill head (3), wherein the drill head (3) has two main cutting edges (4, 5) which extend on both sides of the longitudinal axis (6) of the drill bit, preferably substantially along a main cutting axis (7), wherein there are provided at least two auxiliary cutting edges (20, 21) which each extend along an auxiliary cutting axis (22, 23) and which are arranged, preferably in a substantially symmetrical manner, at an angle to a main cutting axis (7), wherein each auxiliary cutting edge (20, 21) is formed by a leading rake face (20a, 21a) and by a trailing flank (20b, 21b) adjoining the rake face (20a, 21a), and in that a leading ramp (24, 25) with respect to the rake face (20a, 21a) is provided, said ramp (24, 25) rising axially toward the rake face (20a, 21a) with regard to the longitudinal axis (6) of the drill bit and wherein the ramp (24, 25) ends in the region of the rake face (20a, 21a) of the auxiliary cutting edge (20, 21),
**characterized**
**in that** the end point (26) of the leading ramp (24, 25) is set back axially from the auxiliary cutting edge (20, 21) with regard to the longitudinal axis (6) of the drill bit.

2. The masonry drill bit as claimed in claim 1, **characterized in that** the ramp angle (γ) is between about 20° and about 60°, and/or, that the ramp angle (γ) decreases toward the rake face (20a, 21a), preferably **in that** the ramp (24, 25) has two ramp regions (24a, 24b, 25a, 25b) arranged in succession, and **in that** the ramp angle (γ₂) in the leading ramp region (24b, 25b) is greater than the ramp angle (γ₁) in the trailing ramp region (24a, 25a).

3. The masonry drill bit as claimed in one of claims 1 or 2, **characterized in that** the ramp (24, 25) ends in the rake face (20a, 21a) of the auxiliary cutting edge (20, 21).

4. The masonry drill bit as claimed in one of claims 1 to 3, **characterized in that** the ramp (24, 25) is formed at least in part in the web-like manner, preferably **in that** at least that part of the ramp (24, 25) that is close to the rake face is formed in a web-like manner, preferably, that the web-like part of the ramp (24, 25) is configured in a curved, in particular circularly curved, manner, preferably **in that** the web-like, circularly curved part is aligned with the longitudinal axis (6) of the drill bit.

5. The masonry drill bit as claimed in one of the claims 1 to 4, **characterized in that** the main cutting edges (4, 5) and the transverse cutting edge (8) are arranged on an in particular single-piece cutting insert (3a), and/or **in that** the auxiliary cutting edges (20, 21) are each arranged on an in particular single-piece cutting insert (3b, 3c).

6. A cutting insert for a masonry drill bit, in particular for a masonry drill bit as claimed in one of claims 1 to 4, wherein a cutting edge (20, 21) is provided which extends along an auxiliary cutting axis (22, 23), wherein the cutting edge (20, 21) is formed by a leading rake face (20a, 21a) and by a trailing flank (20b, 21b) adjoining the rake face (20a, 21a),
wherein a leading ramp (24, 25) with respect to the rake face (20a, 21a) is provided, said ramp (24, 25) rising axially toward the rake face (20a, 21a) with regard to the longitudinal axis (6) of the drill bit and wherein the ramp (24, 25) ends in the region of the rake face (20a, 21a),
**characterized**
**in that** the edge of the ramp (24, 25), in a side view transverse to the auxiliary cutting axis (22, 23) and the longitudinal axis (6), is V-shaped, wherein the end point (26) of the ramp (24, 25) is set back axially from the cutting edge (20, 21) with regard to the longitudinal axis (6) of the drill bit.

7. The cutting insert as claimed in claim 6, **characterized in that** the ramp angle (γ) is between about 20° and about 60°, and/or, that the ramp angle (γ) decreases toward the rake face (20a, 21a), preferably **in that** the ramp (24, 25) has two ramp regions (24a, 24b, 25a, 25b) arranged in succession, and **in that** the ramp angle (γ₂) in the leading ramp region (24b, 25b) is greater than the ramp angle (γ₁) in the trailing ramp region (24a, 25a).

8. The cutting insert as claimed in one of claims 6 or 7, **characterized in that** the ramp (24, 25) ends in the rake face (20a, 21a) of the cutting edge (20, 21).

9. The cutting insert as claimed in one of claims 6 to 8, **characterized in that** the ramp (24, 25) is formed at least in part in the web-like manner, preferably **in that** at least that part of the ramp (24, 25) that is close to the rake face is formed in a web-like manner, preferably, that the web-like part of the ramp (24, 25) is configured in a curved, in particular circularly curved, manner, preferably **in that** the web-like, circularly curved part is aligned with the longitudinal axis (6) of the drill bit.

10. A core drill having a cylindrical support in which a plurality of cutting inserts are inserted,
**characterized**
**in that** the cutting inserts are designed according to any one of the claims 6 to 9.

## Patentansprüche

1. Gesteinsbohrer mit einem Schaft (1) mit einem Einsteckende (2) und einem Bohrkopf (3), wobei der Bohrkopf (3) zwei Hauptschneidkanten (4, 5) aufweist, die sich beidseits der Bohrerlängsachse (6), vorzugsweise im Wesentlichen entlang einer Hauptschneidachse (7), erstrecken, wobei mindestens zwei Zusatzschneidkanten (20, 21) vorgesehen sind, die sich jeweils entlang einer Zusatzschneidachse (22, 23) erstrecken und die, vorzugsweise im Wesentlichen symmetrisch, in einem Winkel zu einer Hauptschneidachse (7) angeordnet sind, wobei jede Zusatzschneidkante (20, 21) durch eine vorlaufend angeordnete Spanfläche (20a, 21a) und durch eine an die Spanfläche (20a, 21a) angrenzende, nachlaufend angeordnete Freifläche (20b, 21b) gebildet ist und dass eine im Hinblick auf die Spanfläche (20a, 21a) vorlaufend angeordnete Rampe (24, 25) vorgesehen ist, wobei die Rampe (24, 25) zur Spanfläche (20a, 21a) hin bezogen auf die Bohrerlängsachse (6) axial ansteigt und wobei die Rampe (24, 25) im Bereich der Spanfläche (20a, 21a) der Zusatzschneidkante (20, 21) mündet,
**dadurch gekennzeichnet, dass**
die Mündungsstelle (26) der vorlaufend angeordneten Rampe (24, 25) gegenüber der Zusatzschneidkante (20, 21) bezogen auf die Bohrerlängsachse (6) axial zurückversetzt ist.

2. Gesteinsbohrer nach Anspruch 1, **dadurch gekennzeichnet, dass** der Rampenwinkel (γ) zwischen etwa 20° und etwa 60° liegt und/oder dass sich der Rampenwinkel (γ) zur Spanfläche (20a, 21a) hin verkleinert, vorzugsweise dass die Rampe (24, 25) zwei hintereinander angeordnete Rampenbereiche (24a, 24b, 25a, 25b) aufweist und dass der Rampenwinkel (γ₂) in dem vorlaufend angeordneten Rampenbereich (24b, 25b) größer als der Rampenwinkel (γ₁) in dem nachlaufend angeordneten Rampenbereich (24a, 25a) ist.

3. Gesteinsbohrer nach einem der Ansprüche 1 oder 2, **dadurch gekennzeichnet, dass** die Rampe (24, 25) in der Spanfläche (20a, 21a) der Zusatzschneidkante (20, 21) mündet.

4. Gesteinsbohrer nach einem der Ansprüche 1 bis 3, **dadurch gekennzeichnet, dass** die Rampe (24, 25) zumindest zum Teil stegartig ausgebildet ist, vorzugsweise dass zumindest der spanflächennahe Teil der Rampe (24, 25) stegartig ausgebildet ist, vorzugsweise dass der stegartige Teil der Rampe (24, 25) gebogen, insbesondere kreisförmig gebogen, ausgestaltet ist, vorzugsweise dass der stegartige, kreisförmig gebogene Teil auf die Bohrerlängsachse (6) ausgerichtet ist.

5. Gesteinsbohrer nach einem der Ansprüche 1 bis 4, **dadurch gekennzeichnet, dass** die Hauptschneidkanten (4, 5) und die Querschneidkante (8) auf einem insbesondere einstückigen Schneideinsatz (3a) angeordnet sind, und/oder dass die Zusatzschneidkanten (20, 21) jeweils auf einem insbesondere einstückigen Schneideinsatz (3b, 3c) angeordnet sind.

6. Schneideinsatz für einen Gesteinsbohrer, insbesondere für einen Gesteinsbohrer nach einem der Ansprüche 1 bis 4, wobei eine Schneidkante (20, 21) vorgesehen ist, die sich entlang einer Zusatzschneidachse (22, 23) erstreckt, wobei die Schneidkante (20, 21) durch eine vorlaufend angeordnete Spanfläche (20a, 21a) und durch eine an die Spanfläche (20a, 21a) angrenzende nachlaufend angeordnete Freifläche (20b, 21b) gebildet ist,
wobei eine vorlaufend angeordnete Rampe (24, 25) bezogen auf die Spanfläche (20a, 21a) vorgesehen ist, wobei die Rampe (24, 25) zur Spanfläche (20a, 21a) hin bezogen auf die Bohrerlängsachse (6) axial ansteigt und wobei die Rampe (24, 25) im Bereich der Spanfläche (20a, 21a) mündet,
**dadurch gekennzeichnet, dass**
die Kante der Rampe (24, 25) in einer Seitenansicht quer zur Zusatzschneidachse (22, 23) und zur Längsachse (6) V-förmig ist, wobei die Mündungsstelle (26) der Rampe (24, 25) gegenüber der Schneidkante (20, 21) bezogen auf die Bohrerlängsachse (6) axial zurückversetzt ist.

7. Schneideinsatz nach Anspruch 6, **dadurch gekennzeichnet, dass** der Rampenwinkel (γ) zwischen etwa 20° und etwa 60° liegt und/oder dass sich der Rampenwinkel (γ) zur Spanfläche (20a, 21a) hin verkleinert, vorzugsweise dass die Rampe (24, 25) zwei hintereinander angeordnete Rampenbereiche (24a, 24b, 25a, 25b) aufweist und dass der Rampenwinkel (γ₂) in dem vorlaufend angeordneten Rampenbereich (24b, 25b) größer als der Rampenwinkel (γ₁) in dem nachlaufend angeordneten Rampenbereich (24a, 25a) ist.

8. Schneideinsatz nach einem der Ansprüche 6 oder 7, **dadurch gekennzeichnet, dass** die Rampe (24, 25) in der Spanfläche (20a, 21a) der Schneidkante (20, 21) mündet.

9. Schneideinsatz nach einem der Ansprüche 6 bis 8, **dadurch gekennzeichnet, dass** die Rampe (24, 25) zumindest zum Teil stegartig ausgebildet ist, vorzugsweise dass zumindest der spanflächennahe Teil der Rampe (24, 25) stegartig ausgebildet ist, vorzugsweise dass der stegartige Teil der Rampe (24, 25) gebogen, insbesondere kreisförmig gebogen, ausgestaltet ist, vorzugsweise dass der stegartige, kreisförmig gebogene Teil auf die Bohrerlängsachse (6) ausgerichtet ist.

10. Kernbohrer mit einer zylindrischen Stütze, in die mehrere Schneideinsätze eingesetzt sind,
**dadurch gekennzeichnet, dass**
die Schneideinsätze nach einem der Ansprüche 6 bis 9 ausgestaltet sind.

## Revendications

1. Trépan de maçonnerie comportant une queue (1) présentant une extrémité d'insertion (2) et une tête de perçage (3), dans lequel la tête de perçage (3) comporte deux bords de coupe principaux (4, 5) qui s'étendent de part et d'autre de l'axe longitudinal (6) du trépan, de préférence sensiblement le long d'un axe de coupe principal (7), dans lequel il y a au moins deux bords de coupe auxiliaires (20, 21) qui s'étendent chacun le long d'un axe de coupe auxiliaire (22, 23) et qui sont disposés, de préférence de manière sensiblement symétrique, à un angle par rapport à l'axe de coupe principal (7), dans lequel chaque bord de coupe auxiliaire (20, 21) est formé d'une face de coupe avant (20a, 21a) et d'un flanc arrière (20b, 21b) contigu à la face de coupe (20a, 21a), et dans lequel une rampe avant (24, 25) par rapport à la face de coupe (20a, 21a) est prévue, ladite rampe (24, 25) s'élevant axialement vers la face de coupe (20a, 21a) par rapport à l'axe longitudinal (6) du trépan, et la rampe (24, 25) se termine dans la zone de la face de coupe (20a, 21a) du bord de coupe auxiliaire (20, 21), **caractérisé en ce que** le point final (26) de la rampe avant (24, 25) est axialement en retrait du bord de coupe auxiliaire (20, 21) par rapport à l'axe longitudinal (6) du trépan.

2. Trépan de maçonnerie selon la revendication 1, **caractérisé en ce que** l'angle de rampe (γ) est compris entre environ 20° et environ 60°, et/ou **en ce que** l'angle de rampe (γ) diminue vers la face de coupe (20a, 21a), de préférence **en ce que** la rampe (24, 25) comporte deux zones de rampe (24a, 24b, 25a, 25b) disposés successivement, et **en ce que** l'angle de rampe (γ₂) dans la zone de rampe avant (24b, 25b) est supérieur à l'angle de rampe (γ₁) dans la zone de rampe arrière (24a, 25a).

3. Trépan de maçonnerie selon l'une des revendications 1 ou 2, **caractérisé en ce que** la rampe (24, 25) se termine par la face de coupe (20a, 21a) du bord de coupe auxiliaire (20, 21).

4. Trépan de maçonnerie selon l'une des revendications 1 à 3, **caractérisé en ce que** la rampe (24, 25) est formée au moins en partie en forme de bande, de préférence **en ce qu'**au moins la partie de la rampe (24, 25) qui est proche de la face de coupe est formée en forme de bande, de préférence, **en ce que** la partie de la rampe (24, 25) en forme de bande est configurée de manière incurvée, en particulier circulairement incurvée, de préférence **en ce que** la partie circulairement incurvée en forme de bande est alignée sur l'axe longitudinal (6) du trépan.

5. Trépan de maçonnerie selon l'une des revendications 1 à 4, **caractérisé en ce que** les bords de coupe principaux (4, 5) et le bord de coupe transversal (8) sont disposés sur une plaquette de coupe en particulier monobloc (3a), et/ou **en ce que** les bords de coupe auxiliaires (20, 21) sont disposées chacune sur une plaquette de coupe (3b, 3c) réalisée en particulier d'une seule pièce.

6. Plaquette de coupe pour un trépan de maçonnerie, en particulier pour un trépan de maçonnerie selon l'une des revendications 1 à 4, dans laquelle un bord de coupe (20, 21) s'étend le long d'un axe de coupe auxiliaire (22, 23), dans laquelle le bord de coupe (20, 21) est formé d'une face de coupe avant (20a, 21a) et d'un flanc arrière (20b, 21b) contigu à la face de coupe (20a, 21a), dans laquelle une rampe avant (24, 25) par rapport à la face de coupe (20a, 21a) est prévue, ladite rampe (24, 25) s'élève axialement vers la face de coupe (20a, 21a) par rapport à l'axe longitudinal (6) du trépan et dans laquelle la rampe (24, 25) se termine dans la zone de la face de coupe (20a, 21a), **caractérisée en ce que** le bord de la rampe (24, 25), dans une vue latérale transversale à l'axe de coupe auxiliaire (22, 23) et à l'axe longitudinal (6), est en forme de V, le point d'extrémité (26) de la rampe (24, 25) étant axialement en retrait du bord de coupe (20, 21) par rapport à l'axe longitudinal (6) du trépan.

7. Plaquette de coupe selon la revendication 6, **caractérisée en ce que** l'angle de rampe (γ) est compris entre environ 20° et environ 60°, et/ou **en ce que** l'angle de rampe (γ) diminue vers la face de coupe (20a, 21a), de préférence **en ce que** la rampe (24, 25) comporte deux zones de rampe (24a, 24b, 25a, 25b) disposées successivement, et **en ce que** l'angle de rampe (γ₂) dans la zone de rampe avant (24b, 25b) est supérieur à l'angle de rampe (γ₁) dans la zone de rampe arrière (24a, 25a).

8. Plaquette de coupe selon l'une des revendications 6 ou 7, **caractérisée en ce que** la rampe (24, 25) se termine par la face de coupe (20a, 21a) du bord de coupe (20, 21) .

9. Plaquette de coupe selon l'une des revendications 6 à 8, **caractérisée en ce que** la rampe (24, 25) est formée au moins en partie en forme de bande, de préférence **en ce qu'**au moins la partie de la rampe (24, 25) qui est proche de la face de coupe est formée en forme de bande, de préférence, **en ce que** la partie de la rampe (24, 25) en forme de bande est configurée de manière incurvée, en particulier circulairement incurvée, de préférence **en ce que** la partie circulairement incurvée en forme de bande est alignée sur l'axe longitudinal (6) du trépan.

10. Carotteuse comportant un support cylindrique dans lequel sont insérées plusieurs plaquettes de coupe, **caractérisée en ce que** les plaquettes de coupe sont conçues selon l'une quelconque des revendications 6 à 9.
